Europäisches Patentamt

European Patent Office

Office européen des brevets

(19)

(11) EP 0 500 845 B1

(12) FASCICULE DE BREVET EUROPEEN

(45) Date de publication et mention
de la délivrance du brevet:
**10.07.1996 Bulletin 1996/28**

(51) Int Cl.6: **C04B 28/00**, C04B 12/00
// (C04B28/00, 18:04)

(21) Numéro de dépôt: **91914914.6**

(22) Date de dépôt: **26.08.1991**

(86) Numéro de dépôt international:
**PCT/FR91/00689**

(87) Numéro de publication internationale:
**WO 92/04298 (19.03.1992 Gazette 1992/07)**

(54) **PROCEDE D'OBTENTION D'UN LIANT GEOPOLYMERIQUE PERMETTANT LA STABILISATION, LA SOLIDIFICATION ET LA CONSOLIDATION DE DECHETS OU DE MATERIAUX TOXIQUES**

**VERFAHREN ZUR HERSTELLUNG EINES GEOPOLYMEREN BINDEMITTELS GEEIGNET ZUR STABILISIERUNG, VERFERTIGUNG UND KONSOLIDIERUNG VON ABFALLSTOFFEN ODER TOXISCHEN MATERIALIEN**

**METHOD FOR OBTAINING A GEOPOLYMER BINDER ALLOWING TO STABILIZE, SOLIDIFY AND CONSOLIDATE TOXIC OR WASTE MATERIALS**

(84) Etats contractants désignés:
**BE CH DE ES GB IT LI**

(30) Priorité: **04.09.1990 FR 9010958**

(43) Date de publication de la demande:
**02.09.1992 Bulletin 1992/36**

(73) Titulaire: **Davidovits, Joseph**
**F-02100 Saint-Quentin (FR)**

(72) Inventeur: **Davidovits, Joseph**
**F-02100 Saint-Quentin (FR)**

(56) Documents cités:
DE-A- 3 840 794     FR-A- 2 621 260
US-A- 4 509 985     US-A- 4 642 137

Printed by Jouve, 75001 PARIS (FR)

**Description**

Cette invention se rapporte à une méthode de solidification et de stockage de déchets ou de matériaux qui sont dangereux ou potentiellement toxiques pour l'homme et l'environnement naturel.

Ces dernières années on a prêté beaucoup attention au problème posé par le stockage à long terme de déchets toxiques, radio-actifs ou non-compatibles avec l'environnement naturel. Ces déchets toxiques et dangereux sont des produits dérivés des industries minières, chimiques, pétrolières, atomiques, et aussi d'autres activités, comme les ordures urbaines et ménagères.

Dans le cadre de cette invention, le terme déchet désigne exclusivement un rebut ou un résidu contenant des produits toxiques et dangereux pour l'homme et l'environnement naturel. Le terme stabilisation d'un déchet, ou d'un matériau, signifie que les éléments toxiques contenus dans ce déchet, ou ce matértiau, ont été transformés en une forme chimique qui est devenue stable et résistante au lessivage par les eaux naturelles.

Le terme solidification du déchet, ou du matériau toxique, désigne la transformation d'un déchet, ou d'un matériau, liquide, pâteux, semi-solide, solide, en une masse monolithique dure et mécaniquement résistante.

Par exemple, dans les industries minières, il est nécessaire d'extraire de grande quantité de minéraux pour atteindre le minerai. En général la séparation de la gangue et du minerai a lieu dans une usine située à proximité de la mine, et cette gangue est mise en décharge sur place, dans ce que l'on appelle des bassins de décharge. Ces bassins sont soumis aux aléas des intempéries et aussi aux infiltrations des eaux souterraines; des eaux polluées passent ainsi dans l'environnement écologique. Les sites de décharge provenant de mines non-métalliques, comme par exemple les mines de potasse, sont caractérisés par une concentration élevée en sel qui peut être lessivé au cours du temps, ce qui augmente considérablement les concentrations en chlorure dans les nappes fréatiques environnantes. Les décharges des mines de charbon et de nombreuses mines métalliques possèdent souvent de très haute teneur en sulfure. L'érosion climatique accompagnée d'oxydation peut aboutir à la formation d'acide sulfurique, lequel pénétrera dans l'environnement écologique, entraînant avec lui de nombreux métaux lourds toxiques.

Les liant inorganiques conventionnels sont en général utilisés pour stabiliser les sols et décharges contaminés par les déchets toxiques. Cependant ces liants inorganiques sont très limités dans leur action. Ainsi le ciment Portland, les liants à bases de silicate soluble, tout comme les liants à base de chaux (dit aussi pouzzolaniques) sont incompatibles chimiquement avec une grande variété de déchets, comme par exemple: les sels sodiques arsenates, borates, phosphates, iodates et sulfures, les sels de magnésium, d'étain, de zinc, de cuivre, de plomb; les argiles et les limons; le charbon et la lignite. L'agglomération de ces déchets est difficile et, même une fois durcie, leur masse ne reste pas solide longtemps dans le temps. De plus, ces liants sont dégradés par les infiltrations de solutions acides. Si l'on se trouve en présence de fortes concentrations en sulfures oxydés, celles-ci arrivent à décomposer le matériau qui a durci, accélérant ainsi le processus de dégradation et de lessivage des substances dangereuses.

Les liants inorganiques convenant bien à la stabilisation et la solidification des déchets toxiques et à la consolidation des sols contaminés par eux, se trouvent être ceux appartenant à la classe des liants géopolymèriques de type poly(sialate) ou poly(sialate-siloxo). Ainsi, la publication internationale WO 89/02766 déposée par la demanderesse, correspondant au brevet européen EP 0338060 et au brevet US 4,859,367, décrit une méthode de solidification et de stockage de déchet qui permet de conférer une très longue stabilité dans le temps, comparable à certains matériaux archéologiques. Plus particulièrement aussi elle permet la solidification et le stockage de déchets qui sont dangereux ou potentiellement toxique pour l'homme et l'environnement naturel. Le procédé de stabilisation, de solidification et de stockage décrit dans la publication internationale WO 89/02766 consiste à préparer et mélanger le dit déchet toxique avec un liant géopolymère silico-aluminate alcalin, dans des proportions telles que l'on obtienne un mélange contenant in-situ une matrice géopolymèrique de type poly(sialate) (-Si-O-Al-O-) et/ou poly(sialate-siloxo) (Si-O-Al-O-Si-O-) et/ ou poly(sialate-disiloxo) (Si-O-Al-O-Si-O-Si-O-), la dite matrice géopolymèrique réalisant conjointement à la fois la stabilisation des éléments toxiques et la solidification en un matériau solide et durable; dans cette matrice géopolymèrique, le rapport molaire des oxydes $Al_2O_3:Na_2O+K_2O$ est compris entre 1,5 et 4,0, ces valeurs permettant de conférer une très longue stabilité dans le temps.

Le procédé de durcissement de déchets radioactifs, décrit dans la demande de brevet allemand DE 38.40.794, emploie également une matrice géopolymèrique de type poly(sialate-siloxo). La vitrification de la masse est réalisée à l'aide de chauffage par micro-ondes.

Dans la présente invention les tests de stabilité au lessivage acide sont conformes à la "Regulation 309, Revised Regulations of Ontario, 1980" comme amendée Reg. 464/85 par Environmental Protection Act, Novembre 1985, Ontario, Canada. Le test au lessivage acide est le suivant:

On réduit en poudre 50g de l'échantillon et on les introduit dans une bouteille de 1000 ml en polypropylène et on ajoute 800 ml d'eau déionisée. L'ensemble est placé sur un mélangeur rotatif (14 rpm) pendant 15 minutes, puis on mesure le pH de la solution et on ajoute les quantités nécessaires d'acide acétique 0,5 N (ou d'acide chlorhydrique) pour ajuster le pH jusque 5.0. On continue l'extraction sous rotation continue, en ajustant le pH à 5.0, si nécessaire, après 1 heure, 3 heures, 6 heures et 22 heures. Après 24 heures d'extraction, on ajuste avec de l'eau déionisée le volume total du liquide pour obtenir 1000 ml et on mesure le pH final. L'extrait est filtré sur une membrane de 0,45 microns. La lessive (le filtrat) est analysée pour la détection des métaux par DC Plasma Emission Spectrophotometry.

Au contraire, les tests de stabilité au lessivage employés dans l'état antérieur n'impliquent pas de milieu acide, se font pendant des durées très courtes avec très peu ou pas du tout d'agitation.

Le test au lessivage employé dans le brevet U.S. 4,116,705 (Chappell), Sep. 26, 1978, est décrit à la col. 4, lignes 11-16:

La "Lessive" est la solution obtenue en broyant 10 g de la roche artificielle dure obtenue à partir de la boue, puis en ajoutant cette poudre fine à 100 ml d'eau distillée et en agitant à 20°C pendant 1 heure, à l'aide d'une agitation magnétique, puis en filtrant sur un papier filtre Waunan No 1, sauf si indiqué autrement".

Les tests de lessivage employés dans les brevets allemands DE 24,26,641 (Chappell) et DE 29,44,484 (Chappell) suivent la même procédure que celle décrite dans le brevet U.S. 4,116,705 ci-dessus. Dans le test de lessivage utilisé dans le brevet allemand DE 26,34,839, on plonge 90 g du matériau dur dans 900 ml d'eau normale à température ambiante, pendant 72 heures, et sans aucune agitation.

Il est évident pour l'homme de l'art que les produits toxiques qui ne furent pas lessivés à l'extérieur des produits solidifiés (roche artificielle) à la suite de leur immersion dans l'eau, ces produits toxiques auraient été extraits et lessivés s'ils avaient été soumis à des conditions beaucoup plus agressives comme celles impliquant un lessivage acide et décrites par la Régulation 309 Canadienne, et ceci pour au moins deux raisons essentielles:

a) Les matériaux solidifiés revendiqués dans l'état antérieur sont connus comme étant très vulnérables à l'attaque des solutions acides. Ils auraient donc été détruits s'ils avaient été soumis au test d'extraction acide, sous rotation et pendant 24 heures. Ceci explique pourquoi, dans l'état antérieur, on ne fait référence qu'aux tests de lessivage impliquant uniquement de l'eau avec seulement 1 heure d'agitation, ou pas d'agitation du tout.

b) Une fois que la structure du matériau solidifié a été détruite (par attaque acide), les éléments toxiques seraient très facilement devenu solubles dans la solution, puisque le pH est acide et que l'extraction dure 24 heures (sous agitation).

L'efficacité des liants géopolymèriques employés dans le traitement des déchets toxiques a été aussi décrite dans les publications de J.Davidovits et al. et D.C. Comrie et al., voir par exemple dans la revue Geopolymer '88, Vol. 1, Proc. of the 1rst Conference on Soft Mineralurgy, 1988, Université de Technologie, Compiègne, France. On y apprend ainsi que, en plus de leur stabilité chimique, les liants géopolymèriques permettent d'obtenir une consolidation rapide, avec des résistances à la compression élevées, comme par exemple une résistance à la compression de 30 MPa au bout de 2 Jours (cf. Figure 8.1.), à la température ordinaire. Les tests réalisés avec des composés contenant de l'arsenic indiquent également qu'il est préférable, dans certain cas, d'ajouter les alcalis (NaOH ou KOH) non pas sous forme liquide, en solution acqueuse comme s'est généralement le cas avec les liants GEOPOLYMITE, mais sous forme solide, par exemple en paillete.

Quelque fois cependant, dans les cas où il y a urgence, il serait préférable de mettre en oeuvre un liant géopolymèrique permettant une solidification beaucoup plus rapide à la température ordinaire, par exemple un durcissement au bout de 30 minutes et obtenir, déjà au bout de 4 heures à 20°C une résistance à la compression d'au moins 15 MPa. C'est ce que décrit la présente invention.

La présente invention conceme donc un procédé d'obtention d'un liant géopolymèrique permettant la stabilisation, la solidification et la consolidation de déchets toxiques, plus spécialement de sols ou décharges minières, ou de tous matériaux contaminés par des éléments toxiques, ce dit liant géopolymèrique ayant un durcissement rapide à température ambiante. Plus précisément les compositions minérales décrites dans l'invention permettent l'obtention d'un liant géopolymèrique possédant un temps de prise égal ou supérieur à 30 minutes à la température de 20°C et une vitesse de durcissement permettant d'obtenir des résistances à la compression (Rc) égales ou supérieures à 15 MPa, après seulement 4 heures à 20°C, lorsqu'elles sont testées selon la norme standard appliquée aux mortiers de liants hydrauliques avec un rapport liant/sable égal à 0,38 et un rapport eau/liant compris entre 0,22 et 0,27.

Le procédé selon la présente invention, permettant l'obtention d'un liant géopolymèrique, en poudre, à durcissement rapide, avec (Rc)>15MPa à 4h-20°C, pour le traitement ultra-rapide de matériaux contaminés par des éléments toxiques, met essentiellement en oeuvre trois éléments réactifs.

Le premier réactif, en poudre, est un oxyde alumino-silicate ($Si_2O_5, Al_2O_2$) ayant le cation Al en coordination (IV-V) comme déterminé par le spectre d'analyse en Résonance Magnétique Nucléaire MAS-NMR pour $^{27}$Al; cet oxyde alumino-silicate ($Si_2O_5Al_2O_2$) est obtenu par traitement thermique, en milieu oxydant, d'alumino-silicates hydratés naturels, dans lesquels le cation Al est en coordination (VI) comme déterminé par le spectre d'analyse en Résonance Magnétique Nucléaire MAS-NMR pour [27]Al. Dans les brevets antérieurs déposés par un des demandeurs, l'oxyde alumino-silicate ($Si_2O_5Al_2O_2$) était seulement défini par le cation Al en coordination (IV), ce qui représentait l'état de la recherche scientifique antérieure. De nos jours, l'emploi de la Résonance Magnétique Nucléaire, MAS-NMR, a permis de déceler une coordination de type Al(V). En effet le spectre MAS-NMR pour $^{27}$Al présente deux pics, l'un autour de 50-65 ppm caractéristique de la coordination Al(IV) et l'autre autour de 25-35 ppm que certains auteurs scientifiques définissent comme indiquant la coordination Al(V), alors que d'autres préfèrent la considérer comme une coordination Al(IV) déformée. Nous adopterons, dans ce qui suit, la notion de coordination mixte Al(IV-V) pour cet oxyde $(Si_2O_5,Al_2O_2)$.

Le second réactif, en poudre, est un disilicate de sodium et/ou de potassium, soluble dans l'eau, $(Na_2,K_2)(H_3SiO_4)_2$; on utilisera de préférence le disilicate de potassium $K_2(H_3SiO_4)_2$ bien que le disilicate de Sodium $Na_2(H_3SiO_4)_2$ permette également de réaliser les compositions minérales géopolymèriques selon l'invention. On pourra aussi employer un mélange des deux disilicates alcalins.

Le troisième réactif, en poudre, est un silicate de calcium faiblement basique, c'est à dire ayant un rapport atomique Ca/Si inférieur à 1. Il est obtenu en utilisant comme matière première un silicate de calcium basique c'est à dire avec un rapport atomique Ca/Si égal ou supérieur à 1 essentiellement caractérisé par son aptitude à générer, sous l'action d'une attaque alcaline, la formation de silicate du calcium faiblement basique, c'est à dire ayant un rapport atomique Ca/Si inférieur à 1, de préférence proche de 0,5. Cette caractérisation sera établie en utilisant la Spectrométrie Photoélectronique aux Rayons X (X.p.s.) et par l'analyse des rapports $Ca_{2p}/Si_{2p}$ comme il est indiqué par M. Regourd, Phil. Trans. Royal Society London, A.310, pages 85-92 (1983). Les silicates de calcium basiques préférés dans le cadre de la présente invention sont la gehlinite, l'ackermanite et la wollastonite, à l'état vitreux.

Les compositions minérales de l'invention sont également appelées compositions minérales géopolymèriques, car le liant géopolymèrique obtenu résulte d'une réaction de polycondensation minérale, dite géopolymérisation, par opposition aux liants traditionnels hydrauliques dans lesquels le durcissement est le résultat d'une hydratation des aluminates de calcium et des silicates de calcium. Ici aussi, le moyen d'investigation utilisé est le spectre de Résonance Magnétique Nucléaire, MAS-NMR pour [27]Al. Les produits résultant de la réaction de géopolymérisation, comme préconisé dans la présente invention, possède un pic unique à 55 ppm, caractéristique de la coordination Al(IV), alors que les composés d'hydratation obtenus dans les liants hydrauliques traditionnels ont eux un pic à 0 ppm, caractéristique de la coordination Al(VI), c'est à dire de l'hydroxy-aluminate de calcium.

Le spectre MAS-NMR de $^{29}$Si permet également de faire une différentiation très nette entre les géopolymères et les liants hydrauliques. Si on représente le degré de polymérisation du tétraèdre $SiO_4$ par Qn (n=0,1,2,3,4), on peut faire la distinction entre les monosilicates $(Q_o)$, les disilicates $(Q_1)$, les groupes de silicate $(Q_2)$, les silicates greffés $(Q_3)$ et les silicates faisant partie d'un réseau tridimensionnel $(Q_4)$. Ces degrés de polymérisation sont caractérisés en MAS-NMR du $^{29}$Si par les pics suivants: $(Q_o)$ de -68 à -76 ppm; $(Q_1)$ de -76 à -80; $(Q_2)$ de -80 à -85 ppm; $(Q_3)$ de -85 à -90 ppm; $(Q_4)$ de -91 à -130 ppm. Les pics caractérisant les géopolymères se trouvent dans la zone -85 à -100 ppm et correspondent au réseau tridimensionnel $(Q_4)$ caractéristique des poly(sialates) et poly(sialate-siloxo). Au contraire, les résultats de l'hydratation des liants hydrauliques conduisant au silicate de calcium hydraté C-S-H (selon la terminologie employée dans la chimie des ciments) produisent des pics se situant dans la zone -68 à -85 ppm soit le monosilicate $(Q_o)$ ou le disilicate $(Q_1)(Q_2)$; (voir par exemple J. Hjorth, Cement and Concrete Research, Vol. 18, nr.4, 1988 et J.Skibsted, Geopolymer' 88, Session nr.7, Université de Compiègne, 1988).

Selon la terminologie en vigueur pour les géopolymères (voir par exemple Geopolymer '88, Volume 1, Actes du Congres Geopolymer '88, Université de Technologie, Compiègne France), le liant minéral à durcissement rapide, (Rc) >15MPa à 4h-20°C, correspond à un géopolymère de type

(Ca,K)-poly(sialate-siloxo) de formule variant entre

$$(0,6K+0,2Ca)(-Si-O-Al-O-Si-O-),H_2O$$

et

$$(0,4K+0,3Ca)(-Si-O-Al-O-Si-O-),H_2O.$$

On a proposé dans le passé des liants et ciments possédant un durcissement rapide et basés sur des réactions géopolymèriques mettant en jeu les trois réactifs employés dans la présente invention.

Ainsi par exemple le brevet Davidovits/Sawyer US 4,509,985 et son équivalent européen EP 153,097 décrivent des compositions géopolymèriques permettant la réalisation de mortier à durcissement rapide, développant une résistance à la compression Rc=6,89 MPa après 1 heure à 65°C et Rc=41,34 MPa après 4 heures à 65°C. On indique également dans un des exemples de ces brevets une composition dénommée "Geopolymer Example II" développant une résistance à la compression Rc=24 MPa au bout de 4 heures à 23-25°C. D'après l'expérience acquise par l'homme de l'art, une résistance à la compression Rc=15 MPa au bout de 4 heures à 20°C, est équivalente à Rc=22,5 MPa au bout de 4 heures à 25°C. Cette composition comprend 840 g d'un mélange réactionnel dit "standard" auquel a été ajouté, outre des charges inertes, 220g de laitier de haut fourneau broyé. Les composants réactionnels géopolymèriques sont caractérisés par les rapports molaires des oxydes :

| | |
|---|---|
| $K_2O/SiO_2$ | 0.32 |
| $SiO_2/(Al_2O_3)$ | 4.12 |

$H_2O/(Al_2O_3)$ 17.0
$K_2O/(Al_2O_3)$ 1.33
$H_2O/K_2O$ 12.03

ce qui correspond, pour permettre la comparaison avec les compositions minérales géopolymèriques selon l'invention, à une composition géopolymèrique comprenant 1 mole de l'oxyde alumino-silicate $(Si_2O_5,Al_2O_2)$, soit 222g, 1,12 moles de disilicate de potassium $K_2(H_3SiO_4)_2$, soit 300g, 0,21 moles $K_2O$ correspondant à 28g de KOH anhydre à 90%, et 290g d'eau et 220g de laitier.

Comme on le constate aisément, par rapport à l'oxyde alumino-silicate $(Si_2O_5,Al_2O_2)$ dans la composition décrite dans le brevet US 4,509,985 le rapport molaire entre $K_2(H_3SiO_4)_2$ et $(Si_2O_5,Al_2O_2)$ est égal à 1,12.

Dans le prix de revient des compositions minérales géopolymèriques, la partie la plus onéreuse est celle allouée au disilicate de potassium $K_2(H_3SiO_4)_2$. Il était donc très important de pouvoir diminuer très sensiblement la quantité de ce produit très onéreux. C'est le second objectif de la présente invention.

Dans le cadre de l'invention, les compositions minérales géopolymèriques sont caractérisées par les rapports molaires entre les trois éléments réactifs qui sont égaux ou compris entre

$$\frac{(Na_2,K_2)(H_3SiO_4)_2}{(Si_2O_5,Al_2O_2)} \qquad 0,40 \text{ et } 0,60$$

$$\frac{Ca^{++}}{(Si_2O_5,Al_2O_2)} \qquad 0,60 \text{ et } 0,40$$

de telle sorte que

$$\frac{(Na_2,K_2)(H_3SiO_4)_2 + Ca^{++}}{(Si_2O_5,Al_2O_2)} = 1,0$$

avec $Ca^{++}$ désignant l'ion calcium appartenant à un silicate de calcium faiblement basique.

Comme on le constate, la quantité de disilicate alcalin se trouve réduite de 200% à 300% par rapport à l'état antérieur de la technique.

Il ne suffisait pas, pour cela, de simplement baisser la quantité de ce disilicate alcalin. En effet, la demanderesse a été surprise de constater qu'il fallait essentiellement changer l'état physique des constituants.

Ainsi, les compositions du brevet Davidovits/Sawyer US 4,509,985 sont en phase liquide. Le laitier est ajouté à un mélange réactionnel aqueux contenant l'oxyde alumino-silicate $(Si_2O_5,Al_2O_2)$, les alcalis, l'eau et le polysilicate de potassium en solution.

Tout au contraire, dans le cadre de l'invention, les compositions minérales géopolymèriques sont en phase solide, en particulier le second réactif, le disilicate de sodium et/ou de potassium $(Na_2,K_2)(H_3SiO_4)_2$ est en poudre finement divisée, l'eau n'étant ajoutée que dans la phase finale de mélange du mortier ou du liant.

On trouve également dans l'état antérieur de la technique des compositions minérales, en poudre. Ainsi le brevet Heizman US 4,642,137 revendique des compositions minérales comprenant:

100 parties de métakaolin
20 à 70 parties de laitier
85 à 130 parties de charges fines (cendres volantes, argiles calcinées)
70 à 215 parties de silice amorphe
55 à 145 parties d'un mélange contenant du silicate de potassium et de l'hydroxyde de potasse, avec au minimum
55 parties de silicate de potassium seul.

Comme il est indiqué dans ce brevet Heizman US 4,642,137 la silice amorphe a essentiellement pour rôle de remplacer une partie du silicate de potassium nécessaire à la géopolymèrisation, c'est à dire que la silice amorphc réagit avec l'hydroxyde de potasse pour produire, dans le mortier, la quantité de silicate de potassium souhaitée. Pour l'homme de l'art, le terme "silicate de potassium" employé dans ce brevet Heizman US 4,642,137 signifie le silicate de potassium industriel, en poudre, correspondant à la formule $K_2O.3SiO_2,3H_2O$, soluble dans l'eau et permettant de réaliser des liants et colles ayant les mêmes propriétés que les "verres solubles" ou silicate alcalins en solution.

Cependant, ces formulations selon le brevet Heizman US 4,642,137, ne durcissent pas à la température ambiante, puisque pour obtenir ce durcissement rapide, il est absolument nécessaire d'ajouter du ciment portland. Mais, même avec l'addition de ciment portland, les compositions revendiquées ne permettent pas d'obtenir (Rc)>15MPa à 4h-20°C. De plus, l'ajout en grande quantité de ciment Portland dans ces formulations rend ces ciments très sensibles aux acides. Il ne peuvent donc pas être employer pour solidifier et consolider la grandc majorité des sols et décharges minières, ni les déchets toxiques générant des lessivages acides, au contraire des formulations mises en place par le procédé selon la présente invention. Ainsi le meilleur des exemples, l'exemple 28, préconise le mélange suivant:

> 68 parties de métakaolin
> 36 parties de laitier
> 60 parties de cendres volantes
> 103 parties de fumée de silice
> 44 parties de silicate de potasse
> 22 parties d'hydroxyde de potasse et
> 423 parties de ciment portland.

Pour le mortier obtenu, la résistance à la compression Rc à 4 heures à 23°C est de 1000 PSI, soit seulement 6,9 MPa, ce qui est bien inférieur à (Rc)>15MPa à 4h-20°C, tel que revendiqué dans la présente invention. Dans un autre exemple, l'exemple 27, Rc à 4 heures à 23°C n'est que de 680 PSI soit seulement 4,6 MPa, alors que dans les autres exemples décrits dans le brevet US 4,642,137, seules les Rc à 150°F (soit 65°C) sont données, les Rc à 4 heures à 23°C étant trop faibles pour être mentionnées. Et comme mentionné plus haut, ce mortier est détruit par les acides.

En supposant que dans ce brevet Heizman US 4,642,137 le métakaolin corresponde à notre oxyde alumino-silicate $(Si_2O_5,Al_2O_2)$, et que l'hydroxyde de potasse à permis de transformer le silicate de potassium $K_2O.3SiO_2.3H_2O$ en disilicate $K_2(H_3SiO_4)_2$, nous obtenons les compositions exprimées en mole suivantes:

$(Si_2O_5,Al_2O_2)$      0,30 moles
$K_2(H_3SiO_4)_2$      0,20 moles

soit un rapport $K_2(H_3SiO_4)_2$ sur $(Si_2O_5,Al_2O_2)$ égal à 0,66. En fait ce rapport est plus élevé puisque l'excès d'hydroxyde de potasse étant de 0,13 moles de $K_2O$, comme il est revendiqué que cette potasse a réagi avec la fumée de silice pour produire également 0,13 moles de $K_2(H_3SiO_4)_2$, on aboutit ainsi à un total de $K_2(H_3SiO_4)_2$ égal à 0,33, conduisant au rapport $K_2(H_3SiO_4)_2$ sur $(Si_2O_5Al_2O_2)$ égal à 1,10, c'est à dire exactement celui préconisé dans le brevet Davidovits/Sawyer US 4,509,985 et EP 153,097 cité plus haut.

Ces exemples montrent bien que le simple remplacement du silicate en solution par du silicate en poudre provoque un ralentissement très marqué du durcissement puisque, toujours selon le brevet Heitzman US 4,642,137, une activation thermique est nécessaire lorsque l'on veut obtenir un durcissement rapide, en quelques heures.

Or, précisément, dans le cadre de la présente invention, à l'inverse de l'état antérieur de la technique, le disilicate alcalin en poudre permet l'obtention d'un liant géopolymèrique ayant un durcissement rapide, à 20°C, en quelques heures, soit (Rc)>15MPa à 4h-20°C.

On a également préconisé de remplacer la totalité du silicate de potassium en solution, par un mélange de silice amorphe (fumée de silice) et d'hydroxyde de potassium comme dans le second brevet Heizman US 4,640,715. Ici aussi, le durcissement rapide nécessite l'addition de ciment portland, et dans le meilleur exemple, l'exemple 43, la résistance à la compression Rc à 4 heures à 23°C, Rc=1100 PSI soit 7,5 MPa, ce qui est bien inférieur à (Rc)>15MPa à 4h-20°C, comme revendiqué dans la présente invention.

Toujours dans ce second brevet Heizman US 4,640,715, la composition minérale géopolymèrique comprend pour 52 parties de métakaolin, 24 à 28 parties d'hydroxyde de potasse, 73 à 120 parties de fumée de silice, 18 à 29 parties de laitier. Selon la description de ce second brevet Heizman, la fumée de silice réagit avec l'hydroxyde de potasse pour produire, dans le mélange, le silicate de potassium. C'est, selon ce second brevet Heizman, une manière de baisser le prix de revient de ce réactif très onéreux. Nous obtenons donc en mole, selon le même raisonnement que précédemment:

$(Si_2O_5,Al_2O_2)$      0,23 moles
$K_2(H_3SiO_4)_2$      de 0,215 à 0,25 moles

ce qui donne un rapport $K_2(H_3SiO_4)_2$ sur $(Si_2O_5.Al_2O_2)$ compris entre 0,93 et 1,08 soit également pratiquement le rapport discuté précédemment pour le premier brevet Heizman et le brevet Davidovits/Sawyer.

Ces exemples de l'état antérieur de la technique, montrent bien que le simple remplacement du silicate en solution, par un mélange de fumée de silice et d'hydroxyde de potassium, provoque un ralentissement très marqué du durcissement puisque, toujours selon le second brevet Heitzman US 4,640,715, une activation thermique est nécessaire lorsque l'on veut obtenir un durcissement rapide, en quelques heures. En plus, il faut ajouter du ciment Portland, ce qui est néfaste du simple point de vue de la consolidation et du stockage des sols et décharges minières contaminées par des déchets toxiques.

Les exemples décrits dans les brevets Heizman précédents démontrent que le durcissement rapide nécessite une température de 40-60°C. En d'autres termes les mélanges revendiqués sont endothermiques; ils absorbent des calories.

Les essais suivants montrent bien que dans l'état antérieur de la technique, l'endothermicité des mélanges était trop importante pour permettre l'obtention d'un durcissement rapide à température ambiante. On sait que la réaction de géopolymérisation, comme décrite dans les brevets Davidovits FR 2.464.227/2.489.290, est exothermique, cette exothermicité est très bien mise en évidence lorsque le durcissement s'effectue à 40-60°C. On a mesuré l'exothermicité des mélanges contenant ou non de la silice amorphe, comme de la fumée de silice. Le moyen d'analyse est l'Analyse Thermique Différentielle.

On prépare 2 mélanges de poudre:

| | |
|---|---|
| mélange A: oxyde $(Si_2O_5,Al_2O_2)$ | 400g |
| mica micronisé | 100g |
| mélange B: oxyde $(Si_2O_5,Al_2O_2)$ | 400g |
| fumée de silice | 100g |

et 2 mélanges liquides:

| | |
|---|---|
| liquide 1: Solution de Silicate de potassium 40% | 520g |
| KOH à 90% | 82g |
| liquide 2: Solution de silicate de sodium 40% | 1040g |
| NaOH poudre | 120g |

On effectue le mélange entre la poudre et le liquide selon les proportions indiquées dans le tableau, et la géopolymèrisation est suivie par Analyse Thermique Différentielle. On compare les valeurs du rapport J/g, c'est à dire la quantité d'énergie mesurée en Joule sur le poids de l'échantillon en gramme. La température de géopolymèrisation est de 60°C (voir le tableau ci-dessous).

On voit bien que l'ajout de fumée de silice, c'est à dire la formation de silicate de potassium dans le mélange, absorbe des calories. L'exothermicité de l'essai n° 2 (avec fumée de silice) est divisée par 5 par rapport à celle de l'essai n° 1 (sans fumée de silice), et celle de l'essai n° 3 divisée par 2.

On s'explique ainsi pourquoi les mélanges revendiqués dans les brevets Heizman n'ont pas de durcissement rapide à température ambiante.

| N° d'essai | Mélange | | J/g |
|---|---|---|---|
| 1 | poudre A | 55g | |
| | liquide 1 | 100g | 247 |
| 2 | poudre B | 55g | |
| | liquide 1 | 100g | 53 |
| 3 | poudre B | 55g | |
| | liquide 2 | 100g | 116 |

Au contraire, dans le procédé de la présente invention, la présence de silice amorphe, comme la fumée de silice, ou autres silices pour lesquelles, on sait qu'elles peuvent facilement se transformer en silicate de potassium ou de sodium, à température modérée, voire même ambiante, cette silice amorphe sera ajoutée en quantité telle qu'elle ne perturbera pas l'exothermicité naturelle du mélange géopolymèrique. La silice amorphe, comme par exemple la fumée de silice, les cendres de riz, les terres de diatomées, les smectites siliciques, certaines pouzzolanes fortement siliciques (avec un fort pourcentage d'allophane et de verre d'origine volcanique) sont considérées comme des charges finement divisées, réactives. La réactivité de ces charges les fait réagir en surface avec le milieu réactionnel géopolymèrique, augmentant ainsi la résistance mécanique du liant minéral poly(sialate-siloxo). Ces matériaux siliciques ne sont pas dissous, dans un premier temps, à température ordinaire, c'est à dire dans le cadre de l'invention. Cependant, comme dans le cas des liants hydrauliques les contenant, on pourra, au bout de 28 jours ou plus tard, constater leur digestion par la matrice géopolymérique ou par les silicates basiques présents encore dans la matrice.

Le troisième réactif employé dans le procédé de la présente invention est le silicate de calcium faiblement basique avec le rapport atomique Ca/Si inférieur à 1.

Ce sera par exemple le disilicate de calcium $Ca(H_3SiO_4)_2$ ou la tobermorite $Ca_{10}(Si_{12}O_{31})(OH)_6,8H_2O$. Ce troisiè-

me réactif est lié aux précédents par les rapports molaires entre les trois éléments réactifs égaux ou compris entre

$$\frac{(Na_2,K_2)(H_3SiO_4)_2}{(Si_2O_5,Al_2O_2)} \qquad 0,40 \text{ et } 0,60$$

$$\frac{Ca^{++}}{(Si_2O_5,Al_2O_2)} \qquad 0,60 \text{ et } 0,40$$

Dans le cas du disilicate de calcium $Ca(H_3SiO_4)_2$ et du disilicate de potassium $K_2(H_3SiO_4)_2$ nous avons les rapports suivants:

$K_2(H_3SiO_4)_2/(Si_2O_5,Al_2O_2)$ compris entre 0,40 et 0,60
$Ca(H_3SiO_4)_2/(Si_2O_5,Al_2O_2)$ compris entre 0,60 et 0,40.

En d'autres termes la somme du nombre de moles de disilicate de calcium, $Ca(H_3SiO_4)_2$, et du nombre de moles de disilicate de potassium, $K_2(H_3SiO_4)_2$, est égale au nombre de moles de l'oxyde alumino-silicate $(Si_2O5,Al_2O_2)$. Cet oxyde alumino-silicate $(Si_2O_5,Al_2O_2)$ détermine toutes les conditions réactionnelles des compositions minérales géopolymèriques. Il réagira avec un disilicate alcalin ou alcalino-terreux pour former, après géopolymèrisation, un composé $(Si_2O_5,Al_2O_2,Si_2O_5,(K_2O,CaO))$, soit le (K,Ca)-poly(sialate-siloxo), c'est à dire de formule comprise entre

$$(0,6K+0,2Ca)(\text{-Si-O-Al-O-Si-O-})$$

et

$$(0,4K+0,3Ca)(\text{-Si-O-Al-O-Si-O-}).$$

L'oxyde $(Si_2O_5,Al_2O_2)$ réagit tout d'abord avec le disilicate le plus soluble qui est toujours le disilicate alcalin $(Na_2, K_2)(H_3SiO_4)_2$. La quantité de disilicate de calcium intervenant dans la réaction géopolymèrique est déterminée essentiellement par la quantité de disilicate alcalin. Si la somme des moles de ces disilicates est supérieure à 1, la partie non réagissante sera celle qui est la moins soluble, c'est à dire le disilicate de calcium.

Cependant, ce sont les ions calcium $Ca^{++}$ qui déterminent la vitesse de durcissement, en rendant moins solubles les gels géopolymèriques alcalins, la vitesse de durcissement optimale étant atteinte lorsque ces ions $Ca^{++}$ sont intégrés dans la structure géopolymère. Si la quantité d'alcalin $Na^+$ et/ou $K^+$ est importante, il faudra une plus grande quantité d'ion $Ca^{++}$ pour aboutir à la même vitesse de durcissemenL Par contre, si la quantité de disilicate alcalin (Na2,K2)(H3SiO4)2 est trop faible, la dissolution du disilicate de calcium Ca(H3SiO4)2 sera réduite, et le durcissement rapide à 20°C ne s'effectuera pas non plus, et les résistances mécaniques seront plus faibles.

On s'explique ainsi pourquoi dans les brevets Heizman, pour lesquels le rapport $K_2(H_3SiO_4)_2/(Si_2O_5Al_2O_2)$ était proche ou supérieur à 1, la solubilité trop forte du milieu réactionnel ralentissait l'action précipitante des ions $Ca^{++}$ provenant par exemple du laitier ou du ciment portland.

On peut fabriquer séparément le disilicate de calcium $Ca(H_3SiO_4)_2$, par exemple par réaction hydrothermale entre la chaux et la silice.

Cependant, selon une méthode préférée de l'invention, il sera produit, à l'état naissant, dans le liant, après l'addition de l'eau nécessaire à la solubilisation des différents réactifs en poudre. La matière de départ est un silicate de calcium basique, c'est à dire avec le rapport atomique Ca/Si supérieur ou égal à 1. Cette hydratation ne doit pas s'accompagner par la formation de composés contenant de la chaux libre (CaO) ou $Ca(OH)_2$, très sensibles aux acides, comme cela se passe dans l'hydratation des composés du ciment Portland, le silicate bicalciquc $C_2S(2CaO.SiO_2)$, le silicate trical-cique $C_3S(3CaO.SiO_2)$. Par contre d'autres silicates basiques comme la wollastonite $Ca(SiO_3)$, la gehlenite $(2CaO.Al_2O_3.SiO_2)$, l'akermanite $(2CaO.MgO.2SiO_2)$ sont bien adaptés aux conditions déterminées par le procédé de la présente inviention. Lorsque les grains de ces matières sont mis en contact avec une solution alcaline (NaOH ou KOH) il se produit très rapidement une désorption de CaO de telle sorte que le rapport atomique Ca/Si devient inférieur à 1 et tend vers 0,5 pour les silicates basiques initialement de rapport Ca/Si égal ou inférieur à 2, comme la wollastonite, la gehlenite, l'akermanite.

Certains sous-produits de traitements industriels ou de combustion à haute température contiennent essentiellement les silicates basiques gehlenite, akermanite, wollastonite et conviennent donc très bien. Nous citerons, à titre d'exemple non limitatif, le laitier de haut fourneau, certaines scories et certaines cendres de centrales thermiques à haute température, ces produits étant de préférence à l'état vitreux. De plus, comme on peut le suivre par la spectrométrie photoélectronique aux Rayons X. (X.p.s.), comme indiqué plus haut, cette attaque alcaline du silicate basique produit un silicate faiblement basique de rapport atomique Ca/Si=0,5, soit précisément le disilicate de calcium $Ca(H_3SiO_4)_2$. Ce processus est très régulier et peut être complet en 30 minutes, à la température ambiante.

La réaction géopolymèrique utilisée dans la présente invention ne doit pas être confondue avec la simple activation alcaline des liants hydrauliques, ou l'action d'accélérateur de prise des alcalis sur les ciments portlands et autres liants hydrauliques.

En effet, la simple action des alcalis, NaOH ou KOH, sur les ciments portlands ou le laitier de haut fourneau, ou certaines cendres vitrifiées, se traduit par la production des silicates de calcium hydratés, comme mentionné plus haut. Au contraire de ce qui se passe dans la présente invention, ces silicates hydratés cristallisent pour former le C-S-H, constituant principal des ciments calciques hydrauliques. Le C-S-H est un monosilicate et/ou un bisilicate, c'est à dire que les tétraèdres $SiO_4$ qui le constituent appartiennent à la catégorie $(Q_o)$, $(Q_1)$ et éventuellement $(Q_2)$. Ces silicates hydratés sont détruits par les acides et ne peuvent donc pas être utilisés dans le cadre de la présente invention. Au contraire, la géopolymérisation conduit à la formation de tétraèdres $SiO_4$ de type $(Q_4)$, comme déterminé par le spectre d'analyse en Résonance Magnétique Nucléaire MAS-NMR pour $^{29}Si$. Les géopolymères, silico-aluminates de structure tri-dimensionnelle, sont stables aux acides.

Bien que les alcalis, NaOH et KOH, soient des accélérateurs de prise, ils ne constituent pas des accélérateurs de durcissement capables de réaliser l'objet de l'invention, c'est à dire (Rc)>15MPa à 4h-20°C.

Dans le cas des laitiers de haut-fourneau, les alcalis ne sont pas des accélérateurs de prise, mais développent l'hydraulicité latente des laitiers. L'accélérateur de durcissement est en général la température, ou l'addition de ciment portland, comme par exemple dans le cas du brevet Forss US 4,306,912 qui décrit l'utilisation d'un ciment à base de laitier, de ciment portland ou de chaux et d'un accélérateur alcalin comme NaOH et les carbonates de sodium et ou de potassium. Les résistances à la compression sont toutes obtenues après chauffage à 50°C ou 70°C. Ainsi dans le Tableau 4 du brevet Forss on trouve une Rc moyenne de 20 à 30 MPa après 6 heures à 70°C. L'expérience de l'homme de l'art indique que ces résistances de 30 MPa obtenues après 6 heures à 70°C correspondent à Rc = 1 à 3 MPa maximum après 4 heures à 20°C.

De plus toutes ces compositions décrites dans le brevet Forss nécessite la présence soit de chaux, soit de ciment Portland, qui sont tous deux très sensibles à la destruction par les lessivages acides, et ne sont donc pas adaptées aux conditions décrites dans la présente invention quant à la résistance au lessivage acide selon la norme Régulation 309 Canadienne décrite plus haut ainsi que dans la publication internationale WO 89/02766 (Déclaration selon l'Article 19).

L'analyse scientifique à l'aide de la Résonance Magnétique Nucléaire MAS-NMR pour $^{27}Al$ montre que les ciments hydrauliques au laitier résultent de l'hydratation des aluminates, silicates et silico-aluminates de calcium, avec formation soit de gehlenite hydratée $2CaO.Al_2O_3.SiO_2.8H_2O$ ou d'aluminate de calcium hydratée $4CaO.Al_2O_3.10H_2O$ dans lesquels le cation Al est en coordination Al(VI). Le spectre MAS-NMR pour $^{29}Si$ montrent que les tétraèdres $SiO_4$ sont en majorité du type $(Q_o)$, $(Q_1)$, $(Q_2)$, caractérisant le C-S-H.

De même un mélange comprenant l'oxyde alumino-silicate $(Si_2O_5Al_2O_2)$, du laitier et des alcalis KOH,NaOH, ne constitue pas un liant minéral géopolymèrique selon la présente invention. Un mortier réalisé avec ce mélange et de l'eau, ne durcit pas à 20°C avant 24 heures. Ce type de réaction est décrite dans les brevets antérieurs du demandeur. Ainsi les brevets Davidovits FR 2.464.227 et FR 2.489.290 indiquent que si l'oxyde $(Si_2O_5,Al_2O_2)$ n'est pas masqué par une solution de polysilicate, contre l'attaque des bases fortes KOH, NaOH, il se forme un poly(sialate) simple du type de l'Hydroxysodalite qui précipite sans fonction liante.

L'Hydroxysodalite ne constitue un liant que dans les pâtes céramiques, avec très peu d'eau et lorsque le matériau est comprimé, comme revendiqué dans les brevets Davidovits FR 2.346.121 et 2.341.522.

Dans le cadre de l'invention, le troisième réactif de la composition minérale géopolymèrique est le silicate de calcium. Il peut être accompagné d'aluminates et silicates complexes de calcium.

Ainsi le laitier de haut fourneau est en partie formé d'un verre composé entre autre de gehlenite $2CaO.Al_2O_3.SiO_2$, d'akermanite $2CaO.MgO.2SiO_2$, de wollastonite; il en est de même de certaines cendres vivifiées.

Dans le cadre de l'invention, la partie de ces silicates non transformés en silicate de calcium faiblement basique lors de l'attaque alcaline, ou celle qui n'a pas pu participer à la réaction de géopolymèrisation une fois que le rapport $K_2(H_3SiO_4)_2+Ca(H_3SiO_4)_2$ sur $(Si_2O_5,Al_2O_2)$ a atteint la valeur de 1, ces silicates et aluminosilicates s'hydrateront selon le mécanisme connu en vigueur pour les silicates de calcium constituant les ciments hydrauliques. On obtient alors, en plus du géopolymère (K,Ca)(-Si-O-Al-Si-O-) la formation de gehlenite hydratée, de C-S-H, d'aluminate de calcium hydratée, et d'autres silicates de magnésie. Contrairement aux géopolymères, ces composés hydratés sont très sensibles aux lessivages acides. Ils ne pourront être présents qu'en très faible quantité afin de ne pas affaiblir les qualités des matériaux solidifiés selon le procédé de la présente invention. On s'efforcera donc, dans la mesure des matières premières pouvant être disponibles, de se rapprocher le plus possible des quantités stoechiomètriques préconisées pour le procédé.

L'analyse par spectrométrie en Résonance Magnétique Nucléaire du matériau consolidé indiquera pour MAS-NMR de $^{27}Al$, la présence à la fois de pics correspondant à la coordination Al(IV) et Al(VI). En général, dans le cadre de la présente invention la concentration en Al(IV) est 4 à 6 fois supérieure à celle de Al(VI). Elle pourra descendre si dans le mélange on ajoute d'autres charges silico-alumineuses, ou alumineuses, mais, même dans ce cas, le rapport entre la concentration en Al(IV) sur la concentration en Al(VI) sera

$$\frac{Al(IV)}{Al(VI)}$$ égal ou supérieur à 1.

Dans le spectre MAS-NMR de $^{29}Si$, ces mêmes silicates de calcium basiques conduiront à la présence à la fois

de tétraèdres $SiO_4$ $(Q_4)$, $(Q_o)$, $(Q_1)$, $(Q_2)$. En général, la concentration en tétraèdres $SiO_4$ $(Q_4)$ est 4 à 6 fois supérieure à la somme des concentrations en tétraèdres $SiO_4$ $(Q_o)+(Q_1)+(Q_2)$, et selon la nature des charges nous aurons

$$\frac{(Q_4)}{(Q_o)+(Q_1)+(Q_2)} \text{ égal ou supérieur à 1.}$$

Le laitier de haut fourneau est une source bon marché de wollastonite, gehlenite et ackermanite. Les compositions minérales géopolymèriques de l'invention contenant du laitier de haut fourneau permettent de réaliser un liant minéral géopolymèrique, en poudre, contenant:

a) 100 parties en poids d'oxyde alumino-silicate $(Si_2O_5,Al_2O_2)$ ayant le cation Al en coordination (IV-V) comme déterminé par le spectre d'analyse en Résonance Magnétique Nucléaire MAS-NMR pour $^{27}$Al,
et
b) 48-72 parties de disilicate de potassium $K_2(H_3SiO_4)_2$
et
c) 50-70 parties de silicate basique, à l'état vitreux, de granulométrie moyenne 10 microns, composé en partie de gehlenite, d'akermanite, de wollastonite;

le mortier obtenu en ajoutant une quantité d'eau telle que le rapport eau/liant est compris entre 0,20 et 0,27, et une quantité de sable normalisé telle que le rapport liant/sable = 0.38, ce dit mortier durcit à froid et développe au bout de 4 heures à 20°C une résistance à la compression supérieure ou égale à 15 MPa.

Alors que dans le brevet Forss, le laitier doit être broyé très finement puisqu'il est névessaire que celui ci est une surface spécifique comprise entre 400-800 $m^2$/kg, le laitier selon la présente invention est broyé très modérément à une granulométrie moyenne de 10-15 microns ce qui correspond à une surface spécifique de seulement 300 $m^2$/kg. Les silicates de calcium basiques, à l'état vitreux, ont, dans le cadre du procédé selon l'invention, une granulométrie de l'ordre de 10 microns. Certaines cendres vitrifiées, contenant les silicates de calcium basiques mentionnés dans cette invention et provenant de la combustion à haute température peuvent avoir une granulomètrie légèrement inférieure et ne nécessitent pas de broyage.

Lorsque les conditions de fabrication ne permettent pas d'obtenir directement le disilicate alcalin $K_2(H_3SiO_4)_2$, les 48 à 72 parties de disilicate de potassium $K_2(H_3SiO_4)_2$ sont remplacées par un mélange en poudre contenant

35-40 parties de silicate de potassium $K_2O,3SiO_2,3H2_0$
7-15 parties d'hydroxyde de potasse KOH, anhydre à 90%
0-65 parties de silice amorphe.

La comparaison entre le rapport pondéral laitier/eau permet de bien mettre en évidence les différences essentielles entre les compositions géopolymèriques selon la présente invention et l'art antérieur. Le brevet Davidovits/Sawyer indique des valeurs limites de ce rapport, au delà desquelles il n'est plus possible d'utiliser les liants ainsi produits, car le mélange prend immédiatement dans le mélangeur, la prise étant pratiquement instantanée. Il faut également noter que la formulation de "Geopolymer Example II" qui utilise le maximum de laitier, contient également du Fluorure de Calcium, $F_2Ca$. Or, on sait que les fluorures ont une action retardatrice sur la formation du silicate de calcium faiblement basique, et donc sur l'action précipitante des ions $Ca^{++}$, favorisant ainsi un temps de prise plus long, en évitant l'effet de fausse prise.

Au contraire, dans le cadre de la présente invention, la prise est considérée comme lente, puisqu'elle a lieu après un temps supérieur à 30 minutes sans ajout de retardateur, ce qui permet l'utilisation dans l'industrie, avec des mélangeurs traditionnels. Tout homme de l'art comprendra l'intérêt de cette caractéristique de prise à t >30 minutes, à 20°C. Le tableau regroupe les temps de prise pour différents rapports pondéraux laitier/eau, des compositions impliquant des solutions de silicate alcalin (brevet Davidovits/Sawyer US 4,509,985) et des compositions géopolymèriques contenant des disilicates alcalins en poudre, selon la présente invention.

| | rapport laitier/eau | | | | |
| --- | --- | --- | --- | --- | --- |
| | 1.0 | 0.85 | 0.70 | 0.55 | 0.42 |
| début de prise US 4,509,985 (à 73°F, 23°C) | 0 | 0 | 12 min | 30 min | 60 min |
| présente invention (à 20°C) | 30 min | 60 min | 90 min | 3 heures | |

L'homme de l'art sait que plus la quantité d'eau contenue dans le liant est basse et plus les résistances mécaniques sont élevées. Dans l'état antérieur de la technique, le rapport maximum laitier/eau est de 0.70.
L'ouvrabilité des mortiers et bétons exige en général des temps de 30 minutes minimum de prise ce qui oblige de choisir dans le brevet US 4,509,985 un rapport laitier/eau de 0.55. Mais cette quantité élevée en eau fait chuter la résistance à la compression Rc d'environ 30%. Au contraire, dans la présente invention, l'ouvrabilité du mortier est bonne même avec un rapport laitier/eau de 1.0. On obtient donc de fortes résistances mécaniques, avec en plus toutes les autres caractéristiques physiques accompagnant la faible quantité d'eau, comme par exemple une forte densification et une faible porosité, tout en ayant diminué de plus de 200% à 300% la quantité de disilicate $(Na_2,K_2)(H_3SiO_4)_2$, le plus onéreux de tous les réactifs.

Au lieu du disilicate de potassium $K_2(H_3SiO_4)_2$ on peut aussi employer de 42 à 64 parties de disilicate de sodium $Na_2(H_3SiO_4)_2$, ou le mélange des deux silicates. Ceci permet d'utiliser des sources d'alcalis impures contenant à la fois du potassium ou du sodium. C'est souvent le cas pour des sous-produits industriels très riches en alcalis les lessives alcalines de l'industrie minière ou chimique.

L'intérêt de la présente invention réside également dans le fait que l'utilisation de disilicate alcalin $(Na_2,K_2)(H_3SiO_4)_2$ en poudre permet d'utiliser des matières premières bon marché provenant des sous-produits industriels. Une source intéressante de silice amorphe est la fumée de silice récupérée dans les filtres au dessus des fours de fusion des aciers ferro-silicones. Ces fumées de silice contiennent 90-95% de SiO2, du carbone, et 0,5-1% de silicium métal finement dispersé. Ces fumées de silice permettent de fabriquer le disilicate alcalin à des températures très basses, voire à la température ordinaire. Au contraire avec les sables siliceux, il faut en général travailler en autoclave lorsque l'on fait réagir les hydroxydes alcalins, ou en fusion lorsque l'on emploie les carbonates alcalins. On peut également utiliser de la silice amorphe d'origine naturelle comme les terres de diatomées, les smectiques et gaizes très siliceuses, les verres volcaniques et pouzzolanes très siliceuses. Les cendres riches en silice, obtenues par calcination de plante (riz par exemple), peuvent également être employées à cet effet.

La fabrication de l'oxyde alumino-silicate $(Si_2O_5Al_2O_2)$ est réalisée en traitant entre 650°C et 800°C des argiles kaolinitiques. Les sables kaolinitiques peuvent servir de matière première, ainsi que certaines argiles contenant à la fois de la kaolinite, de la montmorionite et de l'illite; de même les sols latéritiques et les latérites contenant de la kaolinite. Des tests effectués sur des pyrophilites montrent que ces matériaux sont aptes à la géopolymèrisation.

Les températures de traitement thermique des matières premières doivent être règlées de telle sorte qu'elles permettent la production optimale en oxyde alumino-silicate $(Si_2O_5,Al_2O_2)$ ayant la plus forte concentration en Al de coordination Al(IV-V) comme déterminé par le spectre MAS-NMR pour [27]Al. Les matériaux siliceux qui, pour des raisons technologiques, doivent également subir un grillage, seront traités à des températures inférieures au point de transformation des silices amorphes en cristobalite lorsque l'on voudra les utiliser comme matière première dans la fabrication du disilicate alcalin en poudre $(Na_2,K_2)(H_3SiO_4)_2$. En général cette température est voisine de 700°C.

Les alcalis sont généralement les hydroxydes de sodium et/ou de potassium fabriqués industriellement par électrolyse. Elles sont également le résultat de la réaction chimique entre un sel alcalin et l'hydroxyde de Calcium ou un matériau le produisant in situ. Les sels alcalins sont sélectionnés parmi les carbonates de sodium et de potassium, les sulfates de potassium, les sulfites de potassium.

Les exemples suivant permettent d'illustrer la présente invention. Ils n'ont pas de caractère limitatif sur la portée globale de l'invention telle que présentée dans les revendications. Toutes les parties indiquées sont en poids.

Exemple 1):

Pour fabriquer le disilicate alcalin $K_2(H_3SiO_4)_2$ en poudre nous avons procédé de la manière suivante:

on mélange 130 parties en poids de fumée de silice avec 125 parties de KOH à 90%; puis on ajoute 30 parties d'eau. Le mélange devient exothermique au bout d'un certain temps et commence à mousser (action de KOH sur le silicium métal). Il acquiert la consistance d'une pâte qui se refroidit et durcit en un matériau moussé, très friable. On obtient un produit, très soluble dans l'eau, à froid, contenant 86% d'extrait sec et 14% d'eau correspondant au disilicate de potassium $K_2(H_3SiO_4)_2$ technique avec 3-5% d'impuretés sous forme de carbone et de silico-aluminate de potassium insolubles.

Exemple 2):

Selon l'exemple 2 du brevet Davidovits/Sawyer 4,509,985 on prépare un mélange contenant

222g d'oxyde $(Si_2O_5Al_2O_2)$,
28g de KOH à 90%

auquel on ajoute un mélange liquide préalablement préparé contenant 310g du disilicate en poudre de l'Exemple 1) et 290g d'eau,

puis 220g de laitier de haut fourneau de granulométrie moyenne 10 microns.

Le liant ainsi obtenu est utilisé pour confectionner un mortier normalisé ayant un rapport liant/sable= 0,38 et dans lequel le rapport eau/liant est 0,27.

Le mortier a une prise au bout de 15 minutes et une résistance à la compression Rc = 16 MPa à 20°C après 4 heures.

Le rapport molaire $K_2(H_3SiO_4)_2/(Si_2O_5,Al_2O_2)$ est égal à 1,12, et le rapport pondéral laitier/disilicate alcalin est égal à 0,73. pour un rapport pondéral laitier/eau = 0,75.

Exemple 3):

on mélange

22 parties d'oxyde $(Si_2O_5,Al_2O_2)$
13 parties de laitier de granulométrie moyenne 10 microns
18 parties de fumée de silice
36 parties d'un mélange liquide préalablement préparé, contenant 12 parties du disilicate préparé selon l'exemple 1), 4 parties de KOH et 20 parties d'eau.

On réalise un mortier comme dans l'exemple 2). La prise à lieu au bout de 3 heures et Rc = 2 MPa à 20°C après 4 heures.

Le rapport molaires $K_2(H_3SiO_4)_2/(Si_2O_5Al_2O_2)$ est égal à 0,43. Le rapport pondéral laitier/disilicate alcalin est égal à 1,08 et le rapport pondéral laitier/eau = 0,65.

Exemple 4)

on mélange

22 parties d'oxyde $(Si_2O_5Al_2O_2)$
15 parties de laitier de granulométrie moyenne 10 microns
18 parties de fumée de silice
40 parties d'un mélange liquide préalablement préparé, contenant 15 parties du disilicate préparé selon l'exemple 1), 4 parties de KOH et 22 parties d'eau.

On réalise un mortier comme dans l'exemple 2). La prise à lieu au bout de 2 heures 30 et Rc = 4 MPa à 20°C après 4 heures, avec un rapport eau/liant = 0,29.

Le rapport molaires $K_2(H_3SiO_4)_2/(Si_2O_5Al_2O_2)$ est égal à 0,56. Le rapport pondéral laitier/disilicate alcalin est égal à 1,0 et le rapport pondéral laitier/eau = 0,68.

Exemple 5)

on mélange à sec

22 parties de $(Si_2O_5Al_2O_2)$
15 parties de laitier de granulométrie moyenne 10 microns
20 parties de fumée de silice
11 parties de KOH

puis on ajoute le sable; et ensuite

25 parties d'eau; on obtient ainsi un mortier comme dans l'exemple 2). Il n'y a aucune prise, même à 24 heures à 20°C.

Exemple 6)

On fait le mélange à sec contenant

27 parties de $(Si_2O_5,Al_2O_2)$
21 parties de laitier de granulométrie moyenne 10 microns
15 parties de fumée de silice
19 parties de disilicate de potassium $K_2(H_3SiO_4)_2$ préparé selon l'exemple 1

on ajoute 215 parties de sable normalisé

puis

21,5 partie d'eau.

La prise commence au bout de 35 minutes, et la résistance Rc au bout de 4 heures à 20°C est de 16 MPa, avec un rapport eau/liant = 0,26

Le rapport molaires $K_2(H_3SiO_4)_2/(Si_2O_5Al_2O_2)$ est égal à 0,58. Le rapport pondéral laitier/disilicate alcalin est égal à 1,10 et le rapport pondéral laitier/eau = 1,023.

Exemple 7)

Le liant en poudre de l'Exemple 6) est utilisé pour solidifier et stabiliser un déchet minier contenant des métaux lourds comme décrit dans l'Exemple 1) de la Publication Internationale WO 89/02766.

Le mode opératoire est le suivant:

on prend 32,5 kg de déchet minier et on y mélange 50 kg de sable. Puis on ajoute 17,5 kg de liant de l'Exemple 6). Après mélange, on ajoute la quantité d'eau nécessaire pour le rapport eau/liant soit inférieur à 0,27. Le mortier obtenu est coulé dans des moules, en les vibrant pour expulser les bulles d'air. Les éprouvettes durcissent au bout de 35 minutes. On laisse durcir à température ambiante. La résistance à 4 heures à 20°C est de 15 MPa.

Les échantillons sont soumis au lessivage acide selon la Regulation 309 Canadienne comme indiqué plus haut, Tous les éléments toxiques ont été piégés dans la matrice géopolymère.

Exemple 8):

On reproduit le mélange de l'Exemple 7) mais on ajoute 25 kg du liant de l'Exemple 6). Dans les conditions décrites dans l'Exemple 7), la résistance à la compression à 4 heures à 20°C est de 25-30 MPa, c'est à dire équivalente à celle obtenue seulement au bout de 48 heures avec les liants GEOPOLYMITE 50 comme décrit dans les publications de D.C. Comrie et al. Elle est également équivalente à la résistance à la compresion obtenue avec les liants GEOPOLYMITE, à 60°C, en 4 heures, comme décrit dans l'Exemple 1) de la publication WO 89/02766.

L'homme de l'art comprendra l'intérêt d'avoir à sa disposition un procédé permettant une stabilisation ultra-rapide de site écologique contaminé par des produits toxiques. En particulier, la partie ainsi solidifiée et stabilisée selon l'invention pourra servir rapidement de voie d'accès pour les engins motorisés et les équipements lourds, déjà 2 à 3 heures seulement après la solidification. Le liant, en poudre, obtenu par ce procédé, sera employé également, avec efficacité, pour la solidification, le stockage et l'entrepôt, de nombreux matériaux contenant des éléments toxiques.

**Revendications**

1. Procédé de fabrication d'un liant géopolymèrique en poudre destiné à la stabilisation et la consolidation ultra-rapide de matériaux, sols ou décharges minières, contenant des déchets toxiques, caractérisé en ce que le dit liant géopolymèrique est obtenu à partir d'une composition minérale géopolymèrique, en poudre, contenant les trois éléments réactifs suivants:

a) un oxyde alumino-silicate $(Si_2O_5,Al_2O_2)$ ayant le cation Al en coordination (IV-V) comme déterminé par le spectre d'analyse en Résonance Magnétique Nucléaire MAS-NMR pour $^{27}$Al;

b) un disilicate alcalin, de sodium et/ou de potassium, $(Na_2,K_2)(H_3SiO_4)_2$;

c) un silicate de calcium

les rapports molaires entre les trois éléments réactifs étant égaux ou compris entre

$$\frac{(Na_2,K_2)(H_3SiO_4)_2}{(Si_2O_5,Al_2O_2)} \qquad 0,40 \text{ et } 0,60$$

$$\frac{Ca++}{(Si_2O_5,Al_2O_2)} \qquad 0,60 \text{ et } 0,40$$

de telle sorte que

$$\frac{(Na_2,K_2)(H_3SiO_4)_2}{(Si_2O_5,Al_2O_2)} + Ca^{++} = 1,0$$

avec Ca$^{++}$ désignant l'ion calcium appartenant à un silicate de calcium faiblement basique dont le rapport atomique Ca/Si est inférieur à 1.

**2.** Procédé selon la revendication 1) caractérisé en ce que le dit silicate de calcium faiblement basique dont le rapport atomique Ca/Si est inférieur à 1, est obtenu à l'état naissant par l'attaque alcaline d'un silicate de calcium basique anhydre dont le rapport atomique Ca/Si est égal ou supérieur à 1, et aboutit à la formation in-situ de silicate de calcium hydraté dont le rapport atomique Ca/Si est égal à 0,5 comme le disilicate $Ca(H_3SiO_4)_2$ ou compris entre 0,5 et 1 comme par exemple la tobermorite $Ca_{10}(Si_{12}O_{31})(OH)6,8H_2O$, comme déterminé par le rapport $Ca_{2p}/Si_{2p}$ en X.p.s. (spectrométrie photoélectronique aux Rayons X).

**3.** Procédé selon la revendication 1) caractérisée en ce que lorsque le dit disilicate alcalin est le disilicate de potassium $K_2(H_3SiO_4)_2$, le dit liant géopolymèrique génère la formation d'un géopolymère de type (Ca,K)-poly(sialate-siloxo) de formule variant entre

$$(0,6K+0,2Ca)(-Si-O-Al-O-Si-O-),H_2O$$

et

$$(0,4K+0,3Ca)(-Si-O-Al-O-Si-O-),H_2O$$

**4.** Procédé selon l'une quelconque des revendications 1) à 3), caractérisé en ce que après durcissement du dit liant géopolymèrique, le cation Al est entièrement en coordination (IV) comme déterminé par le spectre d'analyse en Résonance Magnétique Nucléaire MAS-NMR pour $^{27}$Al, et le degré de polymérisation du tétraèdre $SiO_4$ est $(Q_4)$ comme déterminé par le spectre MAS-NMR pour [29]Si.

**5.** Procédé d'obtention d'un liant géopolymèrique selon l'une quelconque des revendications 1) à 3), dans lequel le dit silicate de calcium basique anhydre est en solution solide avec un aluminate de calcium ou un alumino-silicate de calcium dont le cation Al est en coordination (IV), et le dit oxyde alumino-silicate $(Si_2O_5,Al_2O_2)$ ayant Al en coordination (IV-V) est mélangé avec des poudres alumineuses $(Al_2O_3)$ ou silico-alumineuses $(nSiO_2,Al_2O_3)$ naturels ou artificiels dont le cation Al est en coordination (VI), caractérisé en ce que, après durcissement, le rapport entre la concentration en cation Al de coordination (IV) et la concentration en cation Al de coordination (VI) est:

$$\frac{Al(IV)}{Al(VI)} \qquad \text{égal ou supérieur à 1}$$

comme déterminé par le spectre d'analyse en Résonance Magnétique Nucléaire MAS-NMR pour $^{27}$Al, et le rapport entre la concentration en tétraèdre $SiO_4$ $(Q_4)$ et la concentration en tétraèdre $SiO_4$ $(Qo)+(Q_1)+(Q_2)$ est:

$$\frac{(Q_4)}{(Qo)+(Q_1)+(Q_2)} \qquad \text{égal ou supérieur à 1}$$

comme déterminé par le spectre d'analyse en Résonance Magnétique Nucléaire MAS-NMR pour [29]Si.

**6.** Procédé de préparation d'une composition minérale géopolymèrique selon la revendication 2) caractérisé en ce que le dit silicate de calcium basique dont le rapport atomique Ca/Si est égal ou supérieur à 1 est sélectionné parmi la wollastonite $Ca(SiO_3)$, la gehlenite $(2CaO.Al_2O_3.SiO_2)$, l'akermanite $(2CaO.MgO.2SiO_2)$.

**7.** Composition géopolymèrique, en poudre, destinée à réaliser le procédé de la revendication 1), caractérisée en ce qu'elle contient:

a) 100 parties en poids d'oxyde alumino-silicate $(Si_2O_5,Al_2O_2)$ ayant le cation Al en coordination (IV-V) comme déterminé par le spectre d'analyse en Résonance Magnétique Nucléaire MAS-NMR pour $^{27}$Al,
et
b) 48-72 parties de disilicate de potassium $K_2(H_3SiO_4)_2$
et
c) 50-70 parties de silicate basique, à l'état vitreux, composé en partie de gehlenite, d'akermanite et de wollastonite.

**8.** Composition géopolymèrique selon la revendication 7) caractérisée en ce que les 48 à 72 parties de disilicate de potassium $K_2(H_3SiO_4)_2$ sont remplacées par un mélange contenant

35-40 parties de silicate de potassium $K_2O,3SiO_2,3H_2O$
7-15 parties d'hydroxyde de potasse KOH, anhydre à 90%

0-65 parties de silice amorphe.

9. Composition géopolymèrique, en poudre, destinée à réaliser le procédé de la revendication 1), caractérisée en ce qu'elle contient:

a) 100 parties en poids d'oxyde alumino-silicate $(Si_2O_5,Al_2O_2)$ ayant le cation Al en coordination (IV-V) comme déterminé par le spectre d'analyse en Résonance Magnétique Nucléaire MAS-NMR pour $^{27}$Al,
et
b) 42-64 parties de disilicate de sodium $Na_2(H_3SiO_4)_2$
et
c) 50-70 parties de silicate basique, à l'état vitreux, composé en partie de gehlenite, d'akermanite et de wollastonite.

**Patentansprüche**

1. Verfahren zur Herstellung eines pulverförmigen geopolymeren Binders, der dazu bestimmt ist Materialien, Erdreich, Grubenabfälle, die toxische Bestanteile enthalten auf dem schnellsten Weg zu stabilisieren und zu verfestigen, dadurch gekennzeichnet, dass besagter geopolymerer Binder aus einer mineralischen geopolymeren pulverförmigen Ausgangsmischung gewonnen wird, die folgende drei reaktionsfähige Stoffe enthält:

a) ein Alumino-Silicatoxid $(Si_2O_5,Al_2O_2)$ wobei das Kation Al in der Koordinationsstellung IV-V sich befindet, wie durch das $^{27}$Al MAS-NMR Spektrum gezeigt wird;
b) ein alkalisches Natrium und oder Kaliumdisilicat, $(Na_2,K_2)(H_3SiO_4)_2$;
c) ein Calciumsilicat

dadurch gekennzeichnet, dass die Molarverhältnisse zwischen den drei Stoffgruppen gleich oder zwischen:

$$\frac{(Na_2,K_2)(H_3SiO_4)_2}{(Si_2O_5,Al_2O_2)} \quad 0,40 \text{ et } 0,60 \text{ liegt}$$

und

$$\frac{Ca^{++}}{(Si_2O_5,Al_2O_2)} \quad 0,60 \text{ et } 0,40$$

derart dass

$$\frac{(Na_2,K_2)(H_3SiO_4)_2 + Ca^{++}}{(Si_2O_5,Al_2O_2)} \quad = 1,0$$

mit $Ca^{++}$ wird das Calciumion bezeichnet, das einem schwach basischen Calciumsilicat anghört, dessen atomares Verhältnis unter 1 liegt.

2. Verfahren nach Anspruch 1, dadurch gekennzeichnet, dass besagtes schwach basisches Calciumsilicat mit einem atomaren Verhältnis von unter 1 im Status nascendi gewonnen wird, unter dem alkalischen Angriff eines wasserfreien basischen Calciumsilikats, bei dem das atomare Verhältnis Ca/Si gleich 0.5 ist, wie es bei dem Disilicat Ca$(H_3SiO_4)_2$ der Fall ist oder aber zwischen 0.5 und 1 liegt, wie bei dem Beispiel Tobermorit $Ca_{10}(Si_{12}O_{31})(OH)$6,8$H_2O$, wie es durch das Verhältnis $Ca_{2p}/Si_{2p}$ bei X.p.s. (Photoelektronische Röntgenspektrometrie) berechnet wird.

3. Verfahren nach Anspruch 1), dadurch gekennzeichnet, dass besagtes alkalisches Disilicat aus dem Kaliumdisilicat $K_2(H_3SiO_4)_2$ besteht; durch den besagten geopolymeren Binder wird ein Geopolymer gebildet vom Typus (Ca,K)-poly(sialatesiloxo) mit wechselnder Formel zwischen:

$$(0,6K+0,2Ca)(-Si-O-Al-O-Si-O-),H_2O$$

et

$$(0,4K+0,3Ca)(-Si-O-Al-O-Si-O-),H_2O$$

4. Verfahren nach irgendeiner der Ansprüche 1 bis 3, dadurch gekennzeichnet, dass nach Erhärtung des besagten geopolymeren Binders, das Kation Al sich vollständig in IV-Koordination befindet, wie durch das $^{27}$Al MAS-NMR Spektrum gezeigt wird, und der Polymerisationsgrad des Tetraeders SiO$_4$, (Q$_4$) beträgt, wie man es durch das $^{29}$Si MAS-NMR Spektrum zeigen kann.

5. Verfahren zur Herstellung eines geopolymeren Binders nach irgendeiner der Ansprüche 1 bis 3 in welchem besagtes basisches wasserfreies Calciumsilicat in einer Festlösung ist, mit Calciumaluminat oder einem Calciumaluminosilicat, indem sich das Kation Al in IV-Koordination befindet und besagtes Alumino-Silicatoxyd (Si$_2$O$_5$,Al$_2$O$_2$) (Al in IV-V Koordination) mit aluminiumhaltigen Pulvern (Al$_2$O$_3$) oder mit natürlichen oder künstlichen silico-aluminium-haltigen Pulvern (nSiO$_2$,Al$_2$O$_3$) (Aluminiumkation in VI-Koordination) gemischt wird, dadurch gekennzeichnet, dass nach Erhärtung das Verhältnis zwischen der Konzentration von Al in IV-Koordination und Al in VI-Koordination wie

Al(IV)/Al(VI) gleich oder oberhalb 1 ist

wie es durch das $^{27}$Al MAS-NMR Spektrum bestimmt wird
und das Verhältnis zwischen den Tetraedern SiO$_4$ (Q$_4$) und SiO$_4$ (Qo)+(Q$_1$)+(Q$_2$)

(Q$_4$)/(Qo)+(Q$_1$)+(Q$_2$) gleich oder über 1 ist

wie es durch das $^{29}$Si MAS-NMR Spektrum bestimmt wird.

6. Verfahren zur Herstellung einer mineralischen geopolymeren Verbindung nach Anspruch 2) dadurch gekennzeichnet, dass besagtes basisches Calciumsilicat dessen atomares Verhältnis Ca/Si gleich oder über 1 ist, ausgewählt wird zwischen Wollastonit Ca(SiO$_3$), Gehlenit (2CaO.Al$_2$O$_3$.SiO$_2$), und Akermanit (2CaO.MgO.2SiO$_2$).

7. Pulverförmige geopolymere Verbindung, die dadurch bestimmt ist, das Verfahren nach Anspruch 1) zu realisieren, dadurch gekennzeichnet, dass sie folgendes enthält:

a) 100 Gewichtsteile Alumino-Silicatoxid (Si$_2$O$_5$,Al$_2$O$_2$) wobei das Kation Al in der Koordinationsstellung IV-V sich befindet, wie durch das $^{27}$Al MAS-NMR Spektrum gezeigt wird;
b) 48-72 Gewichtsteile Kaliumdisilicat, (K$_2$)(H$_3$SiO$_4$)$_2$;
c) 50-70 Gewichtsteile basischen Silicats in glassigem Zustand, teilweise zusammengesetzt aus Gehlenit, Akermanit und Wollastonit.

8. Geopolymere Verbindung nach Anspruch 7 dadurch gekennzeichnet, dass die 48 bis 72 Gewichtsteile von Kaliumdisilikat (K$_2$)(H$_3$SiO$_4$)$_2$ durch eine Mischung ersetzt werden, die folgende Teile enthalten:

35-40 Gewichtsteile Kaliumsilicat K$_2$O,3SiO$_2$,3H$_2$O
7-15 Gewichtsteile Kaliumhydroxid KOH, 90% wasserfrei
0-65 Gewichtsteile amorphes Siliciumoxid.

9. Pulverförmige geopolymere Verbindung, die dadurch bestimmt ist, das Verfahren nach Anspruch 1) zu realisieren, dadurch gekennzeichnet, dass sie folgendes enthält:

a) 100 Gewichtsteile Alumino-Silicat Oxid (Si$_2$O$_5$,Al$_2$O$_2$) wobei das Kation Al in der Koordinationsstellung IV-V sich befindet, wie durch das $^{27}$Al MAS-NMR Spektrum gezeigt wird;
b) 48-64 Gewichtsteile Natriumdisilicat, (Na$_2$)(H$_3$SiO$_4$)$_2$;
c) 50-70 Gewichtsteile basischen Silicats in glassigem Zustand, teilweise zusammengesetzt aus Gehlenit, Akermanit und Wollastonit.

## Claims

1. A method for preparing a geopolymeric binder in powder, used for the ultra-rapid treatment of materials, soils or mining tailings containing toxic wastes, wherein said geopolymeric binder being obtained from a powdered mineral geopolymeric composition containing the following three reactive constituents:

a) an alumino-silicate oxide (Si$_2$O$_5$,Al$_2$O$_2$) in which the Al cation is in (IV-V) coordination as determined by MAS-NMR analytical spectroscopy for $^{27}$Al;
b) a disilicate of sodium and/or potassium (Na$_2$,K$_2$)(H$_3$SiO$_4$)$_2$;
c) a silicate of calcium

where the molar ratios between the three reactive constituents being equal to or between

$$\frac{(Na_2,K_2)(H_3SiO_4)_2}{(Si_2O_5,Al_2O_2)} \quad 0{,}40 \text{ and } 0{,}60$$

and

$$\frac{Ca^{++}}{(Si_2O_5,Al_2O_2)} \quad 0{,}60 \text{ and } 0{,}40$$

such that

$$\frac{(Na_2,K_2)(H_3SiO_4)_2 + Ca^{++}}{(Si_2O_5,Al_2O_2)} = 1{,}0$$

where $Ca^{++}$ designates the calcium ion belonging to a weakly basic silicate of calcium whose atomic ratio Ca/Si is lower than 1.

2. A method according to claim 1) wherein said weakly basic silicate of calcium whose Ca/Si atomic ratio is lower than 1, being obtained in the naissant state by alkaline attack on a basic anhydrous silicate of calcium whose atomic ratio Ca/Si is equal to or greater than 1, which generates in situ a hydrated silicate of calcium whose atomic ratio Ca/Si is equal to 0.5 as in the disilicate $Ca(H_3SiO_4)_2$ or between 0.5 and 1 as for example in tobermorite, $Ca_{10}(Si_{12}O_{31})(OH)6,8H_2O$, as determined by the $Ca_{2p}/Si_{2p}$ ratio using XPS (X-ray photoelectronic spectroscopy).

3. A method according to claim 1) wherein said alkaline disilicate being the disilicate of potassium, $K_2(H_3SiO_4)_2$, the geopolymeric binder generates the formation of a geopolymer of the type (Ca,K)-poly(sialate-siloxo) of formula varying between

$$(0.6K+0.2Ca)(-Si-O-Al-O-Si-O-),H2O$$

and

$$(0.4K+0.3Ca)(-Si-O-Al-O-Si-O-),H2O.$$

4. A method according to anyone of claims 1, 2, 3, wherein after hardening has taken place, the Al cation being entirely in (IV)-fold coordination as determined by MAS-NMR analytical spectroscopy for $^{27}Al$, and the degree of polymerisation of $SiO_4$ tetrahedra being ($Q_4$) as determined by MAS-NMR spectroscopy for $^{29}Si$.

5. A method for preparing a geopolymeric binder according to anyone of claims 1, 2, 3, wherein said basic anhydrous silicate of calcium is in solid solution with an aluminate of calcium or an alumino-silicate of calcium in which the Al cation is in (IV) coordination, and said alumino-silicate oxide $(Si_2O_5,Al_2O_2)$ having the Al in (IV-V) coordination is mixed with natural or artificial aluminous $(Al_2O_3)$ or silico-aluminous $(nSiO_2,Al_2O_3)$ powders in which the Al cation is in (VI) coordination, characterised hereby that, after hardening, the ratio between the concentration of Al cation in coordination (IV) and the concentration of Al cation in coordination (VI), being:
Al(IV)/Al(VI) equal to or greater than 1
as determined by MAS-NMR spectroscopy for $^{27}Al$,
and the ratio between the $SiO_4$ ($Q_4$) tetrahedra and the concentration of $SiO_4$ ($Qo$)+($Q_1$)+($Q_2$) tetrahedra being:
($Q_4$)/[($Qo$)+($Q_1$)+($Q_2$)] equal to or greater than 1
as determined by MAS-NMR analytical spectroscopy for $^{29}Si$.

6. A method for preparing a mineral geopolymeric composition according to claim 2, wherein said basic silicate of calcium whose atomic ratio is equal to or greater than 1, being selected from wollastonite, $Ca(SiO_3)$, gehlenite, $(2CaO.Al_2O_3.SiO_2)$ and akermanite $(2CaO.MgO.2SiO_2)$.

7. A geopolymeric compound, in powder, used in the method of claim 1, comprising:

a) 100 parts by weight of alumino-silicate oxide $(Si_2O_5,Al_2O_2)$ having the Al cation in (IV-V) fold coordination as determined by MAS-NMR analytical spectroscopy for $^{27}Al$,
and
b) 48-72 parts by weight of potassium disilicate $(K_2)(H_3SiO_4)_2$
and
c) 50-70 parts of vitreous basic silicate, composed partly of gehlenite, akermanite and wollastonite.

8. A geopolymeric compound according to claim 7) wherein said 48 to 72 parts of potassium disilicate $(K_2)(H_3SiO_4)_2$ powder being replaced by a mixture containing

35-40 parts of potassium silicate $K_2O,3SiO_2,3H_2O$
7-15 parts of potassium hydroxide KOH, 90% water free
0-65 parts of amorphous siliconoxid.

9. A geopolymeric compound, in powder, used in the method of claim 1, comprising:

a) 100 parts by weight of alumino-silicate oxide $(Si_2O_5,Al_2O_2)$ having the Al cation in (IV-V) fold coordination as determined by MAS-NMR analytical spectroscopy for $^{27}$Al,
and
b) 48-64 parts by weight of sodium disilicate $(Na_2)(H_3SiO_4)_2$
and
c) 50-70 parts of vitreous basic silicate, composed partly of gehlenite, akermanite and wollastonite.